Europäisches Patentamt

European Patent Office

Office européen des brevets

(19)

(11) Veröffentlichungsnummer: **0 267 309**

**A1**

(12) **EUROPÄISCHE PATENTANMELDUNG**

(21) Anmeldenummer: **86115604.0**

(51) Int. Cl.⁴: **B62D 5/06**

(22) Anmeldetag: **11.11.86**

(43) Veröffentlichungstag der Anmeldung:
**18.05.88 Patentblatt 88/20**

(84) Benannte Vertragsstaaten:
**DE FR GB IT SE**

(71) Anmelder: **Vickers Systems GmbH**
**Frölingstrasse 41**
**D-6380 Bad Homburg(DE)**

(72) Erfinder: **Schulz, René, Dr.**
**Im Spiess 8**
**D-6392 Neu-Anspach(DE)**

(74) Vertreter: **Blumbach Weser Bergen Kramer**
**Zwirner Hoffmann Patentanwälte**
**Sonnenbergerstrasse 43**
**D-6200 Wiesbaden 1(DE)**

(54) **Pumpsystem.**

(57) Pumpsystem, insbesondere zur Lenkhilfe, bei der eine Hydropumpe mit konstantem Verdrängungsvolumen mit einem Stromregelventil (40) zusammengebaut ist. Der Steuerraum (47) des Stromregelventils (40) wird durch eine zusätzliche Druckdifferenz gesteuert, die mittels eines elektrohydraulischen Stromregelventils (60) oder Druckminderventils erzeugt wird. Das Ventil (60) oder Druckminderventil wird durch eine elektrische Steuerschaltung (80) angesteuert, welche Leistungsanforderungen oder Betriebsbedingungen des Gesamtsystems verarbeitet.

Fig. 5

EP 0 267 309 A1

## Pumpsystem

Die Erfindung bezieht sich auf ein Pumpsystem (pumping system), insbesondere zur Lenkhilfe, mit den Merkmalen des Oberbegriffs des Anspruchs 1.

Lenkhilfpumpen sind gewöhnlich in der Bauart als Flügelzellenpumpen ausgebildet und mit dem Antriebsmotor des Fahrzeugs starr verbunden, in welchem die Lenkilfe angewendet wird. Mit steigender Motordrehzahl nimmt demnach der Pumpenförderstrom zu. Bei höheren Drehzahlen des Motors wird aber gewöhnlich keine starke Lenkunterstützung benötigt. Deshalb wird meist ein Stromregelventil dazu verwendet, einen Teil des Pumpenförderstroms abzuregeln, während der verbleibende geregelte Nutzstrom über das Lenkventil zurück zum Tank geleitet wird. Dabei entspannt sich die unter dem sogenannten Staudruck stehende Hydraulikflüssigkeit, was zu einem entsprechenden Leistungsverlust führt, wenn die Leistung nicht von der Lenkung aufgenommen wird. Eine derart hohe Leistungsaufnahme kommt praktisch im hohen Drehzahlbereich nicht vor, weil man bei rascher Fahrt nicht scharf einlenken kann. Im hohen Drehzahlbereich der Pumpe wird demnach eine ständige Leistungsbereitschaft aufrecht erhalten, die in ihrer Höhe nicht benötigt wird und somit zu einem unnötigen Leistungsverlust führt.

Eine hohe Leistungsbereitschaft der Pumpe wird gewöhnlich bei langsamer Fahrt und dabei insbesondere beim Einparken benötigt. Dabei kommt es vor, daß das Lenkrad extrem eingeschlagen wird, wobei die Servolenkeinrichtung den geregelten Förderstrom der Pumpe nahezu oder gänzlich absperrt. Dadurch nimmt der Druck im System stark zu, und das Druckbegrenzungsventil des Systems spricht an. Dieses ist gewöhnlich als Vorsteuerventil für das Stomregelventil ausgebildet, d. h. das Stromregelventil wird alsdann als gesteuertes Druckbegrenzungsventil betrieben. Wegen der baulichen Vereinigung des Stromregelventils mit der Hydraulikpumpe wird gewöhnlich die umgesetzte Leistung innerhalb der Pumpe in Wärme umgewandelt, so daß diese in kurzer Zeit einen dramatischen Temperaturanstieg erleben kann, was in seltenen Fällen zur Zerstörung der Pumpe führt.

Um die Pumpe funktionsfähig zu halten, ist es bereits bekannt (EP 153 968), ein Temperaturfühlerventil in dem Entladestromweg des Druckbegrenzungsventils zur Öffnung eines Auslaßweges zum Einlaßkanal vorzusehen, wenn die Temperatur im Entladestromweg über einen Grenzwert ansteigt.

Bei dieser Lösung wird der fallende Leistungsbedarf bei steigender Fahrtgeschwindigkeit unberücksichtigt gelassen.

Zur Verringerung des Leistungsverlustes ist es bereits bekannt, das Stromregelventil für einen fallenden Kennlinienast der Nutzstrom-Pumpendrehzahl-Charakteristik auszulegen und zu gestalten (DE-A 2 265 097 und DE-A 2 652 707. Hierbei wird jedoch nur die Motordrehzahl und nicht die Fahrtgeschwindigkeit des Fahrzeugs berücksichtigt, in welchem die Hilfslenkung eingebaut ist.

Der Erfindung liegt die Aufgabe zugrunde, ein Pumpsystem, insbesondere zu Lenkhilfe, zu - schaffen, das einen geregelten Arbeitsstrom abgibt, wobei die Größe dieses geregelten Arbeitsstromes nach Betriebsbedingungen oder Leistungsanforderungen steuerbar ist.

Die gestellte Aufgabe wird dadurch gelöst, daß die zweite, druckniedrigere Kolbenfläche des Stromregelventils mit einem für einen Steuerstrom ausgelegten, elektrohydraulischen Stromregelventil oder einem elektrisch ansteuerbaren Differenzdruckventil in hydraulischer Verbindung steht, um eine zusätzliche Druckveränderung an der zweiten Kolbenfläche des Stromregelventils zu bewirken und so die Arbeitsweise des Stromregelventils zu steuern.

Bei dieser Lösung ist das elektrohydraulische Stromregelventil oder Differenzdruckventil in einer Steuerleitung angeordnet und braucht deshalb keine großen Hydraulikströme zu bewältigen. Wegen seiner relativ geringen Größe kann demnach das elektrohydraulische Stromregelventil oder das Differenzdruckventil billig sein. Dem Steuerraum des hauptsächlichen Stromregelventils, in welchem die zweite, druckniedrigere Kolbenfläche angeordnet ist, wird ein zusätzlicher Steuerstrom entnommen, so daß an einer normalerweise vorhandenen Drossel ein Druckabfall ensteht, der auf den Schieberkolben des hauptsächlichen Stromregelventils einwirkt. Der Druckabfall kann auch mit einem als Druckminderventil wirksamen Differenzdruckventil erzeugt werden. In beiden Fällen führt der verminderte Druck im Steuerraum des hauptsächlichen Stromregelventils dazu, daß dieses den abgeregelten Förderstrom relativ vergrößert. Dadurch wird naturgemäß der Nutzstrom oder Arbeitsstrom relativ verringert, und der Systemdruck fällt gegebenenfalls. Dadurch fällt auch die umgesetzte Leistung. Mannkann dafür sorgen, daß die umgesetzte Leistung auf einem Wert bleibt, bei den eine gefahrbringende Temperaturerhöhung sicher vermieden wird.

Bei rascher Fahrt kann der Nutz-oder Arbeitsstrom auf einen Wert heruntergeregelt werden, der die geringere Leistungsanforderung bei rascher Fahrt widerspiegelt.

Die Leistungsbereitschaft des beschriebenen Systems kann auch dadurch den Lenkerfordernissen angepaßt werden, daß der Lenkausschlag abgestastet und dem System als Steuergröße zugeführt wird. Auf diese Weise ist es möglich, die Leistungsbereitschaft gerade dann zu erhöhen, wenn ein Lenkeinschlag erfolgt.

Aus Gründen der Vereinfachung kann man sich damit begnügen, das System auf hohe und auf niedrige Leistungsbereitschaft zu schalten. Die hohe Leistungsbereitschaft wird bei langsamer Fahrt sowie bei Kurvenfahrt benötigt, während man bei rascher Fahrt keine hohe Leistungsbereitschaft benötigt und beim Einparken, bei äußerstem Lenkradeinschlag, wenn die Servolenkeinrichtung den Arbeitsstrom absperrt, die hohe Leistungsbereitschaft wegen der Wärmeentwicklung geradezu gehährlich ist. Die elektrische Steuerschaltung kann derart beschaffen sein, daß sie gemäß den abgetasteten elektrischen Betriebsdaten das System entweder auf hohe oder auf niedrige Leistungsbereitschaft schaltet. In diesem Fall ist die zusätzliche Druckveränderung eine konstante Druckdifferenz an dem Schieberkolben des hauptsächlichen Stromregelventils. Der Steuerraum des hauptsächlichen Stromregelventils wird über ein elektrisch ein-und ausschaltbares Ventil mit einer Stelle niedrigen Drucks, beispielsweise mit dem Zufuhrsystem der Pumpe, verbunden.

Ausführungsbeispiele der Erfindung werden anhand der Zeichnungen beschrieben. Dabei zeigt:

Fig. 1 einen vertikalen Längsschnitt durch eine Flügelzellenpumpe, teilweise abgebrochen,

Fig. 2 einen horizontalen Längsschnitt entlang der Linie II-II in Fig. 1, teilweise abgebrochen,

Fig. 3 einen Querschnitt gemäß Linie III-III in Fig. 1,

Fig. 4 ein elektrisch ansteuerbares Stromregelventil im Längsschnitt,

Fig. 5 und 6 ein hydraulisches Schaltbild des Gesamtsystems,

Fig. 7 eine elektronische Steuerschaltung,

Fig. 8 ein Spannungsdiagramm und

Fig. 9 ein Steuerstromdiagramm.

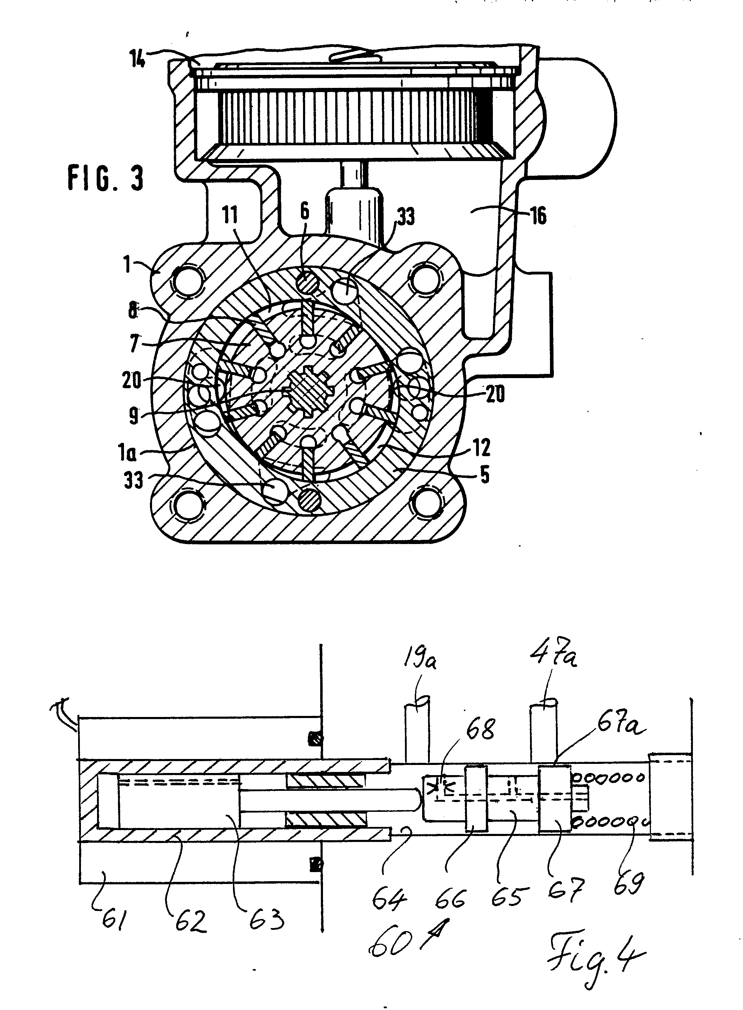

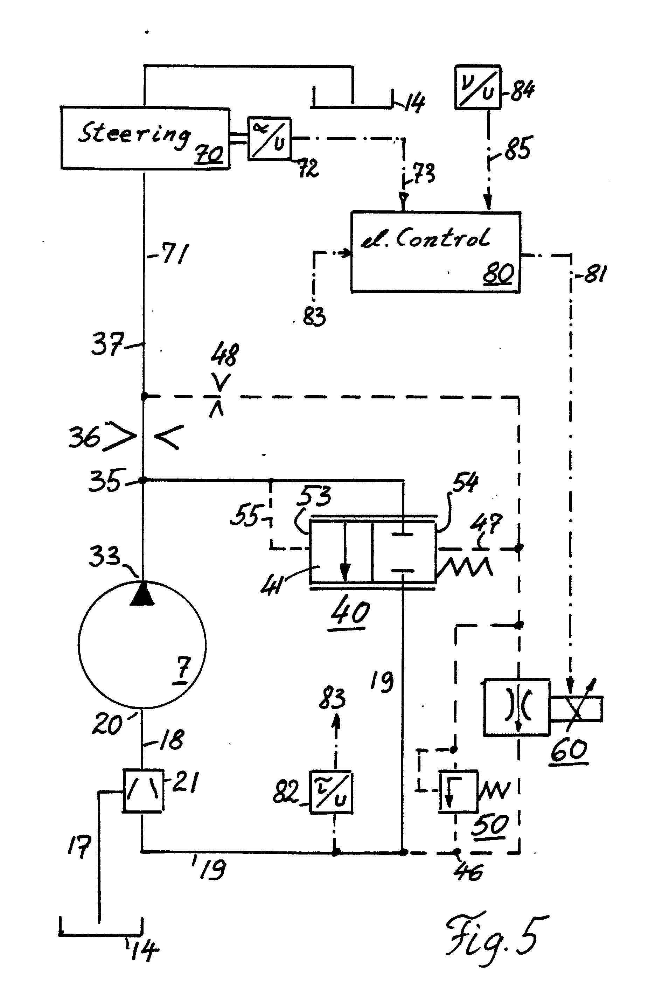

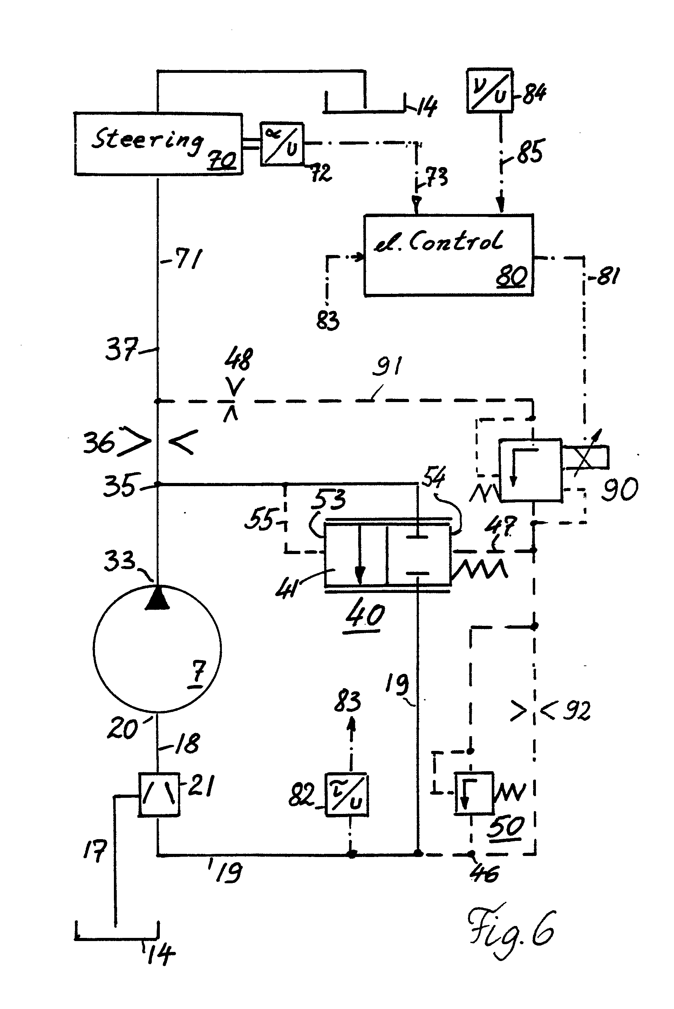

Die Flügelzellenpumpe weist ein Gehäusehauptteil 1 und einen Gehäusedeckel 2 auf, die einen Innenraum 1a druckmitteldicht einschließen. Im Innenraum 1a sitzen - gehäusefest angeordnet - eine Druckplatte 4 und ein Nockenring 5, die durch Stifte 6 drehgesichert sind. Innerhalb des Nockenrings 5 und zwischen dem Gehäusedeckel 2 und der Druckplatte 4 ist ein Rotor 7 angeordnet, der (Fig.3) eine Reihe von radialen Führungsschlitzen besitzt. Innerhalb dieser Führungsschlitze sind Flügel 8 radial verschieblich gelagert. Der Rotor 7 ist über eine Welle 9 antreibbar, die in einer Lagerbohrung des Gehäusedeckels 2 gelagert ist. Der Rotor 7 ist zylindrisch geformt, während der Nockenring 5 einen angenähert ovalen Innenumriß aufweist, dessen kleine Achse etwa dem Durchmesser des Rotors entspricht, während die große Achse die Auszugslänge der Flügel 8 bestimmt. Auf diese Weise liegen zwischen dem Nockenring 5 und dem Rotor 7 zwei sichelförmige Verdrängerbereiche 11, 12, die von den Flügeln 8 in eine Anzahl von Zellenräumen unterteilt werden. Bei der Saugseite des Systems vergrößern sich die Zellenräume, und bei der Druckseite verkleinern sie sich.

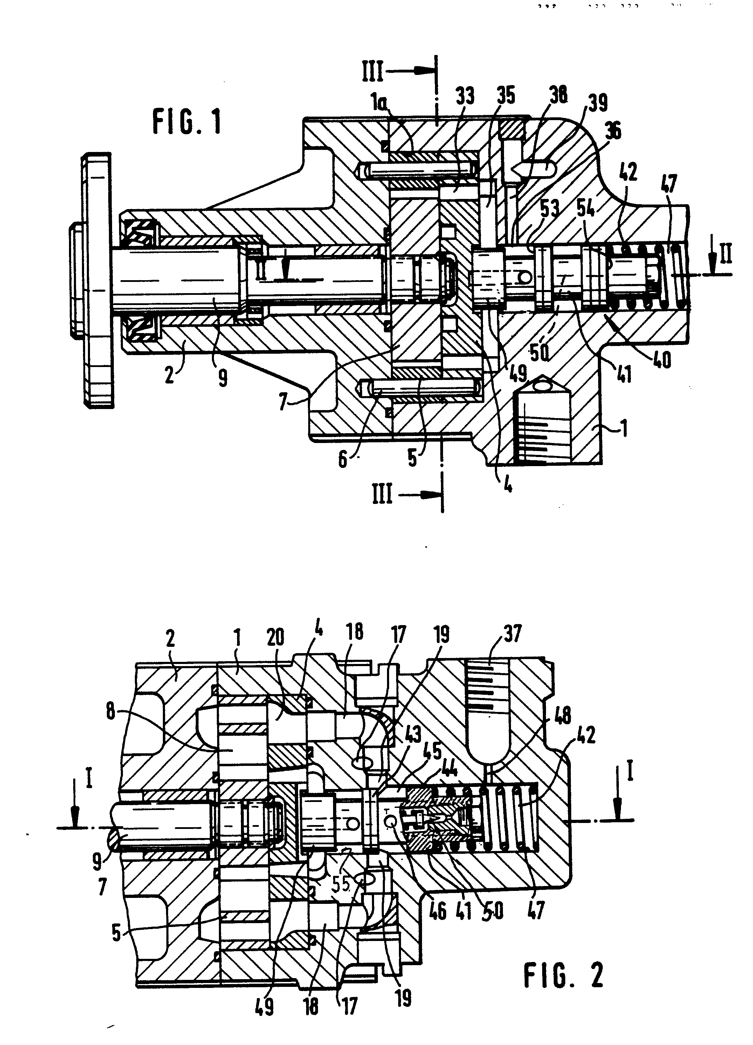

Die Zufuhr von Hydraulikflüssigkeit erfolgt von einem Tank 14 (Fig. 3) und einem Verteilbereich 16 über zwei leicht schräg fallende Bohrungen 17 (Fig. 2), knieförmige Zufuhrkanalabschnitte 18 und Eingangsöffnungen 20 in die jeweiligen Verdrängerbereiche der Pumpe. Die knieförmigen Zufuhrkanalabschnitte 18 weisen jeweils einen radialen Schenkel auf, der in einen Entladekanal 19 (Fig. 2, 5 und 6) einmündet.

Die Abfuhr der Hydraulikflüssigkeit erfolgt über Auslaßöffnungen 33 (Fig. 1) durch die Druckplatte 4 hindurch auf deren Rückseite in einen Druckraum 35. Bei einem Stromregelventil 40 teilt sich der Pumpenförderstrom auf in einem über eine Bohrung 38 fließenden, geregelten Nutzstrom zu einem äußeren Punpenauslaß 37 (Fig. 2) und einen durch die Entladekanäle 19 abfließenden, abgeregelten Förderstrom, Die Bohrung 38 stellt einen Nutzstromkanal und gleichzeitig einen Teil einer Meßblende 36 dar, die vom Nutzstrom durchflossen wird und dessen Druckabfall abgegriffen wird. Der Nutzstrom gelangt über einen schräg verlaufenden Abfuhrkanal 39 (Fig. 1) zum Pumpenauslaß 37 (Fig. 2). Von diesem führt eine Verbindung zu einem Steuerraum 47 des Stromregelventils 40 über eine Dämpfungsdrossel 48. Das Stromregelventil 40 weist einen in einer Ventilbohrung 55 geführten Schieberkolben 41 auf, der durch die Kraft einer Feder 42 in Richtung auf die Druckplatte 4 gedrängt und gegebenenfalls dort zur Anlage gebracht wird. Der Schieberkolben 41 weist eine erste und zweite Kolbenfläche 53, 54 sowie zwei Kolbenbunde 43, 44 auf, zwischen denen sich eine Ringnut 45 erstreckt. Der Kolbenbund 43 ist - schmäler als die Entladekanäle 19 (Fig. 2), welche auf die Ringnut 45 treffen. Von der Ringnut 45 führt ein teilweise radial und teilweise axial sich erstreckender Kanal 46 durch den Schieberkolben 41 in den Steuerraum 47, und der Kanal 46 wird von einem Kegelventil 50 beherrscht, welches beim Überschreiten eines Grenzdrucks im Steuerraum 47 abhebt und somit ein Druckbegrenzungsventil darstellt. Da beim Ansprechen des Druckbegrenzungsventils 50 der Steuerraum 47 druckentlastet wird, wandert der Schieberkolben 41 in Fig. 1 und 2 nach rechts, so daß ein größerer Teil des Förderstroms der Pumpe in den Entladekanal 19 abströmt. Das Kegelventil 50 stellt somit ein Vorsteuerventil für das Ventil 40 dar, welches im Falle des Ansprechens des Vorsteuerventils 50 als Druckbegrenzungs-Hauptventil arbeitet.

Zür Beeinflussung der Strömungsverhältnisse des dem Ventil 40 zuströmenden Hydraulikstromes kann der Schieberkolben 41 einen hohlen Fortsatz 49 aufweisen. Der Fortsatz 49 kann auch als einfacher Anschlagstempel ausgebildet sein, der mit der Platte 4 als Anschlag zusammenarbeitet Schließlich ist es auch möglich, die Verbindung der Räume 35 und 38 als eine Venturidüse zu gestalten.

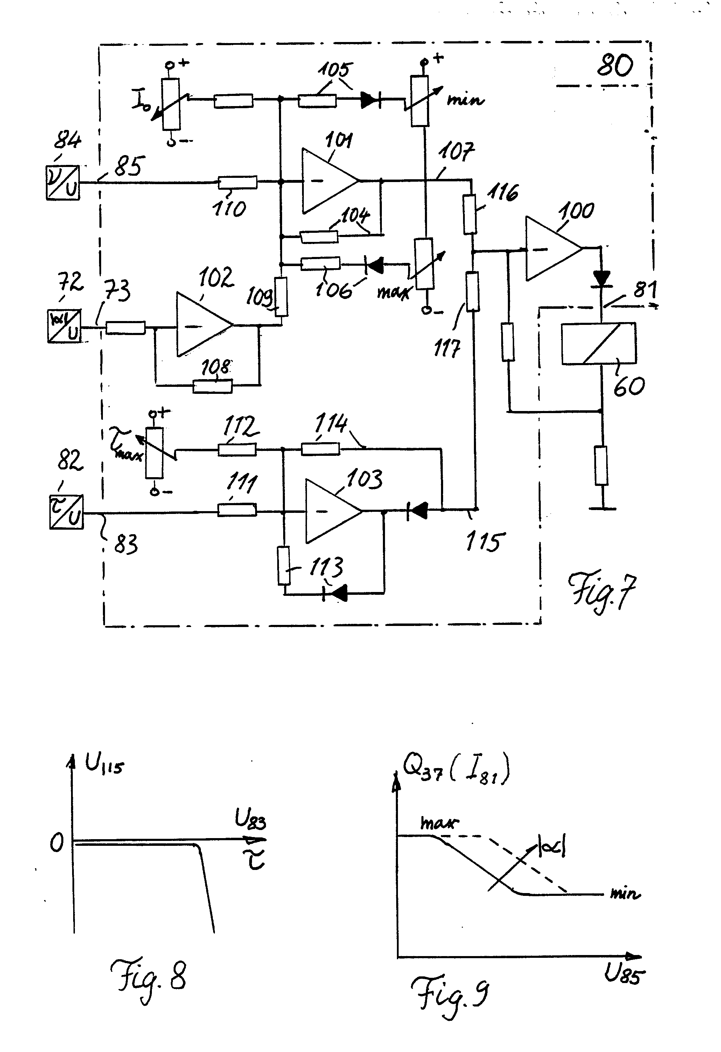

Fig. 4 zeigt ein elektrisch ansteuerbares Stromregel-ventil 60. Dieses enthält eine Wicklung 61, ein Druckrohr 62 und einen Anker 63. Die Teile 61 bis 63 sind in eine Bohrung 64 druckdicht eingefügt, die vorzugsweise im Pumpengehäuse 1 angebracht ist. In der Bohrung 64 ist ein Schieber 65 geführt, der zwei im Abstand zueinander angeordnete Kolben 66 und 67 sowie einen Drosselkanal 68 aufweist und mittels einer Feder 69 gegen einen Fortsatz des Ankers 63 gedrängt wird. Der Drosselkanal 68 überbrückt den Kolbenbund 66, während der Kolbenbund 67 eine Steuerkante 67a zu einer Bohrung 47a bildet, die mit dem Steuerraum 47 des Ventils 40 verbunden ist. Die Bohrung 64 ist über einen weiteren Bohrungskanal 19a mit dem Entladekanal 19 verbunden.

Der Druckabfall an der Drossel 68 wird am Schieberkolben 65 wirksam und beeinflußt die Stellung der Drosselkante 67a derart, daß ein etwa konstanter Strom zwischen den Kanälen 47a und 19a fließt. Die Größe dieses konstanten Stroms kann durch die Ankerkraft beeinflußt werden.

In dem Schaltschema nach Fig. 5 sind die Bezugszeichen der vorstehend beschriebenen Pumpe benutzt. Eine Arbeitsleitung 71 führt zu einer Servolenkeinrichtung 70, die mit einem nicht gezeigten Lenkrad in Verbindung steht, dessen Lenkeinschlag abgetastet und durch einen Lenkwinkelsensor 72 abgetastet werden kann, der als Winkel-Spannungs-Wandler ausgebildet ist.

Eine elektrische Steuerschaltung 80 ist über eine Steuerleitung 81 mit dem elektrisch ansteuerbaren Stromregelventil 60 verbunden und ermöglicht, dieses ein-oder auszuschalten bzw. gegebenenfalls auch proportionale Zwischenwerte einzustellen. Je nach den Erfordernissen wird die elektrische Steuereinrichtung so ausgebildet, daß sie ein Ja-Nein-Signal auf der Leitung 81 oder diskrete Werte oder ein proportionales (innerhalb von Granzen liegendes) Signal abgibt. Es versteht sich, daß ein solches Stromregelventil 60 gewählt wird, welches der Art des Signals angepaßt ist.

Die elektrische Steuerschaltung 80 wird über wenigstens einen elektrischen Betriebsdatenwandler angesteuert. Als solcher Betriebsdatenwandler kommt vor allem ein Temperatursensor 82 in Betracht, der auf die Temperatur der Hydraulikflüssigkeit anspricht und ein entsprechendes Temperatursignal über die Leitung 83 an die elektrische Steuerschaltung 80 abgibt. In Fig. 5 ist der Temperatursensor 82 dem Entladekanal 19 zugeordnet, die Anordnungsstelle könnte aber auch an einem anderen Kanal angeordnet sein, der im Falle des Ansprechens des Druckbegrenzungsventils 50 heiß wird.

Als weiterer Betriebsdatenwandler kommt ein Fahrzeuggeschwindigkeitssensor 84 in Betracht, der mit der elektrischen Steuerschaltung 80 über eine Leitung 85 verbunden ist. Falls erwünscht, kann auch der Lenkradeinschlag winkel bei der elektrischen Steuerschaltung 80 berücksichtigt werden, und zu diesem Zweck ist eine Leitung 73 zu dem Lenkradeinschlagwinkelsenor 72 vorgesehen.

Die Betriebsweise des Gesamtsystems ist wie folgt: Bei Betrieb der Pumpe, symbolisiert durch den Rotor 7, strömt der Nutz-oder Arbeitsstrom durch die Meßblende 36 zum Auslaß 37 und darüberhinaus zur Servolenkeinrichtung 70. Der Druckabfall über der Meßblende 36, gewöhnlich 2 bar, wird von dem Stromregelventil 40 abgetastet, d. h. der Druck auf der Kolbenfläche 53 ist gewöhnlich um 2 bar höher als auf der Kolbenfläche 54. Bei dieser Druckdifferenz wird der Schieberkolben 41 so verschoben, daß ein Teil des geförderten Pumpenstromes über den Entladekanal 19 in das Zufuhrsystem der Pumpe abströmt. (Die Verbindungsstelle des Entladekanals 19 mit dem Zufuhrsystem 17, 18 ist als Injektor 21 gestaltet.)

Wenn durch einen extremen Lenkausschlag die Servolenkeinrichtung 70 den Nutz-oder Arbeitsstrom nahezu absperrt, steigt der Druck im System stark an, und das Druckbegrenzungsventil 50 spricht an, welches als Vorsteuerventil des Ventils 40 zu betrachten ist. Der gesamte Förderstrom der Pumpe fließt über das Ventil 40 und entspannt sich bei dem durch das Druckbegrenzungsventil 50 eingestellten Grenzdruck. Dadurch erhitzt sich die Hyrdaulikflüssigkeit stark, und der Temperatursensor 82 gibt ein ausreichend starkes Signal ab, welches die elektrische Steuerschaltung 80 dazu bringt, einen entsprechenden Steuerstrom an das elektrische Stromregelventil 60 zu senden.Das Ventil 60 wird geöffnet und verbindet den Steuerraum 47 des Ventils 40 mit einer Stelle niedrigeren Druckes, wodurch der Druck im Steuerraum und damit auch auf die Kolbenfläche 54 weiter erniedrigt wird. Dadurch öffnet das Ventil 40 noch weiter, und der Druckabfall an dem Ventil 40 wird nicht mehr durch das Druckbegrenzungsventil 50 bestimmt. Der Widerstand der zwischen dem Raum 35 und dem Einlaß 20 der Pumpe strömenden Hydraulikflüssigkeit wird erniedrigt und damit die umgesetzte Energie verkleinert, wodurch die natürlicherweise abgeführte Wärme größer wird als die erzeugte Wärme. Die Gefahr der Überhitzung der Pump wird damit beendet.

Das erfindungsgemäße System kann auch dazu benutzt werden, den Nutz-oder Arbeitsstrom über den Auslaß 37 entsprechend den Erfordernissen zu regeln. Im Falle einer Lenkhilfpumpe wird die Geschwindigkeit des Fahrzeugs über den Sensor 84 abgetastet, und die elektrische Steuerschaltung 80 bildet einen dementsprechenden Steuerstrom, der über die Leitung 81 dem elektrisch ansteuerbaren Ventil 60 zugeführt wird, welches in diesem Fall als Proportionalventil auszubilden ist. Die Drosselöffnung des Ventils 60 wird demgemäß proportional zu dem angelegten Steuerstrom verändert, so daß der über die Proportionaldrossel abfließende Strom mehr oder weniger groß ist und demnach der sich in der Steuerkammer 47 einstellende Druck mehr oder weniger absinkt. Demgemäß wird das Ventil 40 mehr oder weniger weit geöffnet, und der Anteil des Pumpenförderstromes, der über die Meßblende 36 als Nutz-oder Arbeitsstrom weitergeleitet wird, nimmt gegenüber dem abgeregelten Strom ab, d. h. man kann den Nutz-oder Arbeitsstrom mit steigender Fahrtgeschwindigkeit kleiner machen.

Der Lenkradeinschlagwinkelsensor 72 kann als ein Leistungsanforderungs-Sensor angesprochen werden. Immer dann, wenn eine Leistung an der Last (Servolenkeinrichtung 70) benötigt wird, ist dies mit einem positiven Signal an dem Sensor 72 verknüpft. Die elektrische Steuerschaltung 80 kann dieses über die Leitung 73 angelegte Anforderungssignal in ein entsprechendes Stromsignal aus der Leitung 81 umsetzen, wodurch das Ventil 60 entsprechend geschlossen wird und sich ein entsprechender Druck in der Steuerkammer 47 des Ventils 40 aufbaut. Dadurch wird das Stromregelventil 40 hinsichtlich seines abgeregelten Stromes (Bypass-Stroms) mehr geschlossen, wodurch wiederum ein größerer Anteil des geförderten Stromes am Auslaß 37 als Nutz-oder Arbeitsstrom abgegeben wird.

Fig. 6 zeigt eine Variante der erfindungsgemäßen hydraulischen Schaltung. Statt den Druck im Steuerraum 47 über eine Abflußleitung zu beeinflussen, wird im Falle der Fig. 6 der Druck über eine Zuflußleitung 91 gesteuert, in welcher ein elektrisch ansteuerbares Druckminderventil 90 sitzt. Ferner ist noch eine Drosselleitung 92 vorgesehen, die den Steuerraum 47 mit einer Rücklaufleitung verbindet, um so einen minimalen Flüssigkeitsstrom aufrecht zu erhalten, der für den Betrieb des Druckminderventils 90 benötigt wird. Die Wirkungsweise auf das Gesamtsystem beruht auf der Einstellung des Druckes im Steuerraum 47, wie bereits erläutert.

Fig. 7 zeigt ein Ausführungsbeispiel der elektronischen Steuerschaltung 80. Die Betriebsdatenwandler 72, 82, 84 sind über Eingangsleitungen 73, 83, 85 an der elektronischen Steuerschaltung 80 angeschlossen, deren Ausgangsleitung 81 mit dem Stromregelventil 60 verbunden ist. Im Regler 80 sind vier invertierende Operationsverstärker 100, 101, 102, 103 vorgesehen. Der Inverter 101 besitzt eine hochohmige Rückkopplungsschleife 104 sowie zwei diodenbestückte Rückkopplungsschleifen 105, und 106, die an einem Spannungsteiler liegen und einen minimalen und maximalen invertierten Strom einzustellen ermöglichen. Dazwischen wird eine in etwa linear abfallende Spannung auf der Leitung 107 erzeugt, die durch den Operationsverstärker 100 in einen entsprechenden Strom zum Steuern des Stromregelventils 60 oder des Druckminderventils 90 umgewandelt wird.

Der invertierende Operationsverstärker 102 weist ebenfalls eine Rückkopplungsschleife 108 auf und ist über einen weiteren Widerstand 109 an den Eingang des invertierenden Operationsverstärkers 101 angeschlossen, so daß eine Mischung mit dem über den Widerstand 110 zugeführten Signal des Fahrzeuggeschwindigkeitssensors 84 stattfindent. Durch diese Modifikation des Eingangssignals erfolgt eine Verschiebung der abfallenden Kennlinie in Fig. 9, wie dies gestrichelt und durch den Pfeil bei $\alpha$ angedeutet ist. Zur Berücksichtigung der Fahrtgeschwindigkeit und des Einschlagwinkels ist demnach ein Kennlinienfeld vorgesehen, aufgrund welchem der richtige Durchfluß durch die Wicklung des Ventils 60 oder 90 erfolgt.

Der invertierende Verstärker 103 besitzt einen eingangsseitigen Ankopplungswiderstand 111 und einen Spannungsteiler 112. Der Ausgang des Verstärkers 103 ist mit dem Eingang über je eine diodenbestückte Rückkopplungsschleife 113, 114 verbunden. Die Diode der Rückkopplungsschleife 114 gehört außerdem noch der Ausgangsleitung 115 an. Wie in Fig. 8 dargestellt, ist die Ausgangsspannung $U_{115}$ des Operationsverstärkers ein konstanter Wert, bis die kritische Temperatur erreicht wird, bei welcher die Kurve stark abfällt.

Die Spannungen $U_{107}$ and $U_{115}$ werden über Widerstände 116 und 117 zusammengeführt und an den Eingang des Operationsverstärkers 100 angelegt. Der Einfluß von $U_{115}$ ist normalerweise vernachlässigbar gering; nur im Falle des Auftretens einer Übertemperatur wird der fallende Kennlinienzweig in Fig. 8 erreicht, und dieser bestimmt dann in wesentlichen den durch den Magneten 60 fließenden Strom. Bei geringer Überschreitung der Grenztemperatur wird der hydraulische Strom des Stromregelventils 60 sehr groß und damit das Ventil 40 auf geringen Druckabfall und damit geringe Wärmeerzeugung gebracht.

Es versteht sich, daß die elektronische Steuerschaltung 80 auch in anderer Weise ausgeführt werden kann als erläutert. Man könnte beispielsweise die Betriebsdaten als digitale Signale gewinnen und verarbeiten, um auf diese Weise den gewünschten Strom $I_{81}$ zu erzeugen.

Durch die Erfindung wird also ein Pumpsystem zur Verfügung gestellt, bei dem eine Hydropumpe mit konstantem Verdrängungsvolumen in einer Stromrichtung einen Nutz-oder Arbeitsstrom abgibt, der in Abhängigkeit von Leistungsanforderungen einstellbar ist. Die Leistungsanforderungen können von Betriebsdaten der Last abgeleitet werden, die von dem Pumpensystem betrieben wird. Das Steuer-und Regelsystem ist zweistufig, nämlich eine elektrische Vorsteuerstufe 60 bzw. 90 und eine Hauptstufe in Form eines Stromregelventils 40. Bemerkenswert ist dabei der Umstand, daß die elektrische Steuerleistung gering sein kann, da lediglich ein hydraulischer Hilfssteuerstrom beeinflußt werden muß. Dies steht im Gegensatz zur Beeinflussung einer Drossel in der Hauptleitung, etwa wenn man die Drossel 36 als elektrohydraulische Drossel gestalten würde. Für die Steuerung einer derartigen Drossel würden erhebliche elektrische Leistungen erforderlich sein. Dies trifft auch dann zu, wenn man eine derartige Drossel 36 aufteilen würde in eine Konstantdrossel und eine elektrisch eeinflußte Drossel, deren Druckabfall am Stromregelventil anliegt.

## Ansprüche

1. Pumpsystem, insbesondere zur Lenkhilfe, mit folgenden Merkmalen:
eine Hydraulikpumpe weist einen mit wechselnder Drehzahl (n) angetriebenen Rotor (7) auf, der mit feststehenden Pumpenteilen wenigstens einen Verdrängerbereich (11, 12) bildet, zu dem Einlaßöffnungen (20) und Auslaßöffnungen (33) für Hydraulikflüssigkeit führen;
die Einlaßöffnungen (20) jedes Verdrängerbereichs sind mit einem Zufuhrsystem (17,18) und die Auslaßöffnungen (33) jedes Verdrängerbereichs mit einem Druckraum (35) verbunden; der Druckraum (35) und das Zufuhrsystem (17, 18) stehen über ein Stromregelventil (40) miteinander in Verbindung, das einen abgeregelten Förderstrom in einen Entladekanal (19) des Zufuhrsystems (17, 18) entlädt und einen geregelten Nutzstrom an einen äußeren Pumpenauslaß (37) abgibt, der über eine Arbeitsleistung (71) zu einer Last (Servolenkeinrichtung 70) und von dort zu einer Tankeinrichtung (14) führt; das Stromregelventil (40) enthält einen in einer Ventilbohrung (55) geführten Schieberkolben (41) mit einer ersten, druckhöheren Kolbenfläche (53) und einer zweiten, druckniedrigeren Kolbenfläche (54), eine Ventilfeder (42) sowie eine Meßblende (36), and der ein Druckabfall des geregelten Nutzstroms abgegriffen und den beiden Kolbenflächen (53, 54) des Schieberkolbens (41) zugeführt wird;
**dadurch gekennzeichnet**
daß die zweite, druckniedrigere Kolbenfläche (54) des Stromregelventils (40) mit einem für einen Steuerstrom ausgelegten elektrohydraulischen Stromregelventil (60) oder elektrisch ansteuerbarem Druckminderventil (90) in hydraulischer Verbindung steht, um eine gewollte Druckeinstellung an der zweiten Kolbenfläche (54) des Stromregelventils (40) zu bewirken und so die Arbeitsweise des Stromregelventils (40) zu steuern.

2. Pumpsystem nach Anspruch 1, dadurch gekennzeichnet, daß die gewollte Druckeinstellung an der zweiten Kolbenfläche (54) durch eine zusatzliche, konstante Druckdifferenz am Schieberkolben (41) des Stromregelventils (40) erzeugbar ist, wobei die Druckdifferenz elektrisch zu-und abschaltbar ist.

3. Pumpsystem nach Anspruch 1, dadurch gekennzeichnet, daß die gewollte Druckeinstellung an der zweiten Kolbenfläche (54) durch eine zusätzliche, variable Druckdifferenz am Schieberkolben (41) des Stromregelventils (40) erzeugbar ist, wobei die Druckdifferenz elektrisch zu-und abschaltbar ist.

4. Pumpsystem nach einem der Ansprüche 1 bis 3, dadurch gekennzeichnet, daß eine elektrische Steuerschaltung (80) zur Ansteuerung des elektrohydraulischen Stromregelventils (60) oder Druckminderventils (90) vorgesehen ist, die wiederum von wenigstens einem elektrischen Betriebsdatenwandler (72, 82, 84) ansteuerbar ist.

5. Pumpsystem nach Anspruch 4, dadurch gekennzeichnet, daß der elektrische Betriebsdatenwandler ein Temperatursensor (28) für die Hydraulikflüssigkeit ist.

6. Pumpsystem nach Anspruch 4, dadurch gekennzeichnet, daß der elektrische Betriebsdatenwandler ein Fahrzeuggeschwindigkeitssensor (84) ist.

7. Pumpsystem nach Anspruch 4, dadurch gekennzeichnet, daß der elektrische Betriebsdatenwandler ein Lenkrad-Einschlagwinkel-Sensor (72) ist.

Pumpsystem nach einem der Ansprüche 4 bis 7, dadurch gekennzeichnet, daß die elektrische Steuerschaltung (80) parallel und hintereinandergeschaltete Operationsverstärker (100, 101, 102, 103) enthält, die eingangsseitig mit Signalmischeinrichtungen (109, 110; 111, 112; 116, 117) versehen sind, um einen Ausgangsstrom ($I_{81}$) zu erzeugen, der die Einflüsse der Betriebsdaten ($v$, $\alpha$, $\tau$) je nach ihrer Wichtigkeit enthält.

9. Pumpsystem nach Anspruch 8,
dadurch gekennzeichnet, daß Teile der Operationsverstärker mit diodenbestückten Rückkopplungsschleifen (105, 106; 113, 114) versehen sind.

**FIG. 1**

**FIG. 2**

Vickers 46

FIG. 3

Fig. 4

Fig.5

Fig. 6

0 267 309

Fig. 7

Fig. 8

Fig. 9

**Europäisches Patentamt**

**EUROPÄISCHER RECHERCHENBERICHT**

Nummer der Anmeldung

EP  86 11 5604

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | EP-A-0 072 732  (SOC. ANONYME D.B.A.) <br> *  Seite 2; Seite 3, Zeilen 1-22; Figuren 1,2; Seite 4;  Seite 5, Zeilen  1-22;  Seite  7,  Zeilen 12-24 * <br><br> --- | 1-4,6 | B 62 D    5/06 |
| Y | WO-A-8 303 581  (FORD) <br><br> * Seite 5, letzter Absatz; Seiten 6-8; Figuren 3-6 * | 1,3,4, 6 | |
| A | . <br><br> --- | 2 | |
| Y | EP-A-0 071 909  (NISSAN) <br><br> * Seite 2, Zeile 19  -  Seite  3, Zeile  15;  Seite  4,  Zeile 10 - Seite 7, Zeile 21; Figuren 1,2 * | 1,3,4, 6 | |
| A | | 7,8 | |
| A | EP-A-0 137 491  (NISSAN) <br> * Seite 4, Zeile 11  -  Seite  6, Zeile 16; Figur 2 * <br><br> ---            -/- | 8,9 | |

**RECHERCHIERTE SACHGEBIETE (Int. Cl.4)**

B 62 D    5/00

Der vorliegende Recherchenbericht wurde für alle Patentansprüche erstellt.

| Recherchenort | Abschlußdatum der Recherche | Prüfer |
|---|---|---|
| DEN HAAG | 21-07-1987 | KAPOULAS T. |

Europäisches
Patentamt

**EUROPÄISCHER RECHERCHENBERICHT**

Nummer der Anmeldung

EP   86 11 5604

Seite 2

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | EP-A-0 093 416  (NISSAN)<br><br>*  Seite  13,  letzter  Absatz; Seiten 14,15; Figuren 1,2;  Seite 38,  letzter  Absatz;  Figur  13; Seiten 39-52 *<br><br>----- | 1,4,6-9 | |
| | | | **RECHERCHIERTE SACHGEBIETE (Int. Cl.4)** |

Der vorliegende Recherchenbericht wurde für alle Patentansprüche erstellt.

| Recherchenort<br>DEN HAAG | Abschlußdatum der Recherche<br>21-07-1987 | Prüfer<br>KAPOULAS T. |
|---|---|---|